# FASCICULE DE BREVET EUROPEEN

(11) **EP 1 179 156 B1**
(45) Date de publication et mention de la délivrance du brevet: **10.12.2003**
(21) Numéro de dépôt: 00927336.8
(22) Date de dépôt: 12.05.2000
(51) Int. Cl.: F16L 39/00, F16L 37/12

(54) **MODULE POUR UN COLLECTEUR POUR LA DISTRIBUTION DE FLUIDE ET SYSTEME DE FIXATION POUR DE TELS MODULES**
BAUEINHEIT FÜR EINE SAMMELLEITUNG EINES VERSORGUNGSNETZES UND BEFESTIGUNGSSYSTEM FÜR SOLCHE BAUEINHEITEN
LIQUID DISTRIBUTION COLLECTOR MODULE AND FIXING SYSTEM FOR SAID MODULES

(30) Priorité: 20.05.1999 FR 9906597
(43) Date de publication de la demande: 13.02.2002
(73) Titulaire: Comap Abbeville S.A., 80100 Abbeville (FR)
(72) Inventeur: Bruvry, Michel, 80132 Hautvilliers (FR); Didier, Philippe, 80100 Abbeville (FR); Leger, Jacky, 80132 Neuilly L'Hopital (FR)
(74) Mandataire: Maureau, Philippe
(86) Numéro de dépôt international: FR0001296
(87) Numéro de publication internationale: WO00071924

(56) Documents cités:
- FR-A- 1 468 174
- FR-A- 2 325 874
- US-A- 3 542 403

## Description

La présente invention concerne un module pour un collecteur pour distribution de fluide et un système de fixation pour de tels modules.

Les domaines concernés par l'invention sont essentiellement les domaines suivants : sanitaire eau chaude et eau froide, chauffage central, plancher chauffant basse température et plancher rafraîchissant. Bien entendu d'autres domaines dans lesquels un fluide, de l'eau mais aussi d'autres fluides hydrauliques, est envoyé vers un collecteur avant d'être distribué vers différents organes d'un réseau hydraulique sont également concernés.

Pour s'adapter à la taille d'un réseau de chauffage par exemple, et alors au nombre de radiateurs à alimenter, il est connu de réaliser des collecteurs de manière modulaire. On a alors des modules unitaires qui permettent chacun de distribuer l'eau vers un radiateur ou bien des modules à deux ou trois sorties. En assemblant de tels modules, on peut s'adapter à tous les cas de figure pour ce qui concerne le nombre de sorties nécessaires.

Les modules utilisés pour réaliser un collecteur se présentent sous la forme d'une pièce tubulaire s'étendant selon un premier axe et une ou plusieurs sorties radiales sont prévues dans la paroi de ce module.

Pour assembler plusieurs modules, ceux-ci sont placés les uns à côté des autres reliés mécaniquement entre eux. Plusieurs systèmes de fixation entre modules existent.

Un premier système consiste à munir chaque module d'alésages longitudinaux. On assemble alors les modules en alignant les alésages longitudinaux et en faisant passer dans chaque ensemble d'alésages longitudinaux alignés une tige filetée. Aux deux extrémités de l'ensemble de modules, on réalise un bridage de ces modules à l'aide des tiges filetées.

Un autre système de fixation consiste à réaliser des alésages borgnes à la périphérie de chaque extrémité d'un module. On assemble alors deux modules voisins en plaçant l'un à côté de l'autre deux alésages borgnes et en venant placer dans deux alésages borgnes voisins à chaque fois une petite agrafe qui relie alors les deux modules. En plaçant ainsi les agrafes tout autour de deux modules à relier, on réalise l'assemblage de ceux-ci. Les agrafes utilisées ici s'étendent longitudinalement par rapport à l'axe du collecteur.

Ces deux systèmes de fixation présentent des inconvénients. Dans le premier système, la bonne étanchéité entre les modules est réalisée par le bridage de ces modules entre eux. Si donc le monteur effectue un serrage trop important ou pas assez important lors du bridage, il y a des risques de fuite en cours de fonctionnement de l'installation. Le second système d'assemblage a pour inconvénient qu'il faut avoir accès à toutes les faces du collecteur pour réaliser un bon assemblage.

La présente invention a pour but de fournir un module et un système de fixation pour de tels modules qui ne présentent pas les inconvénients précités. Un but de l'invention est donc de fournir un module et un système de fixation permettant de garantir une bonne étanchéité entre deux modules voisins. Avantageusement, l'assemblage de deux modules voisins se fera facilement, même lorsque le collecteur doit être placé dans un endroit peu accessible.

A cet effet, elle propose un module pour un collecteur pour distribution de fluide, comportant un corps tubulaire s'étendant selon un premier axe dans lequel est réalisé au moins une sortie radiale.

Selon l'invention, le module présente à une extrémité un embout femelle et à son autre extrémité un embout mâle correspondant, et des alésages s'étendant dans un plan sensiblement perpendiculaire au premier axe sont prévus de part et d'autre du module à chacune de ses extrémités, de telle sorte que lorsque deux modules sont emboîtés l'un dans l'autre, les alésages d'un module soient alignés avec les alésages de l'autre module de part et d'autre de l'ensemble ainsi réalisé.

Ainsi, pour assembler deux modules, il suffit de les emboîter l'un dans l'autre et de les bloquer en position en introduisant une pièce faisant office de goupille de chaque côté de l'ensemble réalisé dans les alésages alignés. Avantageusement, les alésages réalisés de part et d'autre d'un module sont parallèles. De cette manière, il est possible de venir solidariser deux modules avec une pièce en forme de U en une seule opération.

Un module selon l'invention présente de préférence un plan de symétrie comportant le premier axe et passant par une sortie radiale. Ceci permet d'accéder au module aussi bien d'un côté que de l'autre.

Dans une forme de réalisation préférentielle, le module selon l'invention présente du côté de l'embout mâle, de chaque côté du corps tubulaire, un alésage s'étendant dans un plan perpendiculaire au premier axe et, du côté de l'embout femelle, de chaque côté du corps tubulaire, se trouvent deux alésages alignés, distants l'un de l'autre, de telle sorte que lorsque deux modules voisins sont emboîtés l'un dans l'autre, chaque alésage correspondant à un embout mâle se trouve entre les deux alésages correspondants de la partie femelle de l'autre module. Un excellent positionnement d'un module par rapport à un module voisin peut ainsi être réalisé. On retrouve ici une structure rappelant une charnière.

Pour bien maintenir une pièce faisant office de goupille introduite dans des alésages alignés de modules selon l'invention, un module comporte avantageusement, du côté de l'embout femelle, une languette de retenue, disposée entre les alésages se trouvant de part et d'autre du corps et sensiblement tangente à ces alésages.

Pour assurer une bonne étanchéité entre deux modules, on peut par exemple prévoir un joint torique. Dans ce cas, le module présente par exemple, du côté de l'embout femelle, dans celui-ci, un logement périphérique destiné à recevoir un tel joint torique.

Comme il est déjà connu pour des modules de l'art antérieur, il est avantageux de prévoir deux sorties radiales opposées sur un module.

L'invention concerne également un collecteur pour distribution de fluide, qui comporte au moins deux modules tels que décrits ci-dessus.

Un tel collecteur comporte avantageusement un étrier en forme de U, chaque branche du U venant s'enfiler dans un ensemble d'alésages alignés se trouvant d'un côté du corps tubulaire.

Pour pouvoir garantir une bonne étanchéité, un collecteur selon l'invention comporte par exemple un joint torique prenant place autour de l'embout mâle d'un module.

De toute façon, l'invention sera bien comprise à l'aide de la description qui suit, en référence au dessin schématique annexé montrant une forme de réalisation préférée de modules selon l'invention et de leur système de fixation.
Figure 1 est une vue en perspective éclatée montrant deux modules et un étrier de fixation,
Figure 2 est une vue en coupe selon la ligne de coupe II-II de la figure 1 d'un module selon l'invention,
Figure 3 est une vue en coupe transversale passant par un étrier de fixation d'un ensemble de deux modules montés sur une platine,
Figure 4 est une vue de dessus d'un ensemble de modules selon l'invention assemblés les uns aux autres,
Figure 5 est une vue de dessus de modules selon l'invention présentant plusieurs sorties, et
Figure 6 est une vue en coupe à échelle agrandie selon la ligne de coupe VI-VI de la figure 5 d'un détail de réalisation d'un module selon l'invention.

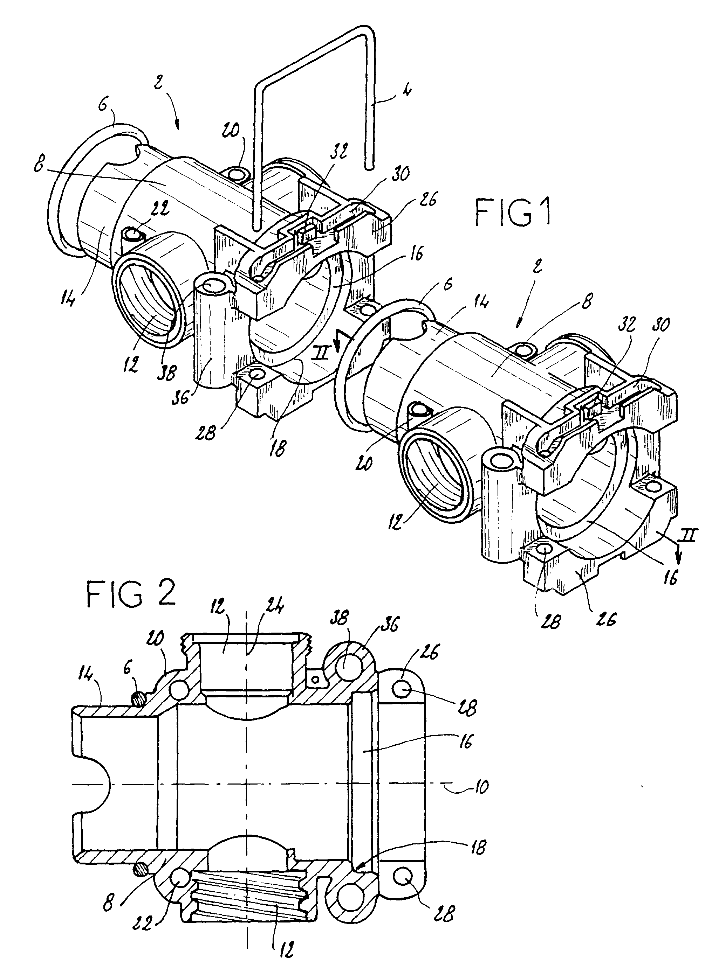

La figure 1 représente deux modules 2 selon l'invention, un étrier 4 de fixation et deux joints toriques 6.

Chaque module 2 est constitué essentiellement d'un corps 8 moulé en matière synthétique. Ce corps 8 est un corps tubulaire d'axe 10 présentant deux sorties radiales 12. De l'eau, ou un autre fluide hydraulique, arrive par exemple dans le module 2 selon l'axe 10 et ressort par une sortie 12 perpendiculairement à cet axe 10.

A une extrémité (à gauche sur les figures 1 et 2) le corps tubulaire 8 présente un embout mâle 14. L'autre extrémité du module 2 présente un embout femelle 16 destiné à recevoir un embout mâle 14 d'un autre module 2. Au niveau de l'embout femelle 16, est réalisé un logement périphérique 18 destiné à recevoir un joint torique 6.

Du côté de l'embout mâle 14, le corps tubulaire 8 présente deux oreilles 20 diamétralement opposées. Ces oreilles 20 sont chacune traversées par un alésage 22 qui s'étend dans un plan perpendiculaire à l'axe 10. Les deux alésages 22 sont parallèles. Ils se trouvent de part et d'autre de l'axe 10. On peut remarquer que le plan défini par les axes 10 et l'axe 24 des sorties radiales 12 est un plan de symétrie du module 2. Un second plan de symétrie de ce module contient l'axe 10 et est perpendiculaire à l'axe 24.

A l'autre extrémité du corps tubulaire 8, c'est à dire du côté de l'embout femelle 16, le module 2 présente deux visières 26 qui font saillie longitudinalement du corps tubulaire 8. A chaque extrémité de chaque visière 26 est réalisé un alésage 28. Ces alésages 28 sont parallèles aux alésages 22 réalisés dans les oreilles 20. De plus, l'écartement entre deux alésages 28 d'une même visière 26 est égale à l'écartement entre deux alésages 22 de deux oreilles 20. Les visières 26 sont disposées de telle sorte que l'espace libre laissé entre elles permette le passage de deux oreilles 20. Entre deux alésages 28 d'une même visière 26, se trouve une rainure 30 destinée à recevoir l'étrier 4 comme décrit plus loin. Une languette de retenue 32 est prévue au bord de cette rainure 30. Elle s'étend dans une direction tangente aux alésages 28.

L'étrier 4 est une tige métallique de section circulaire qui a été pliée pour prendre la forme d'un U. Les deux branches du U sont parallèles et écartées l'une de l'autre de la distance qui sépare deux alésages 28 d'une visière 26. Le diamètre de la tige utilisée pour réaliser l'étrier 4 est adapté au diamètre des alésages 28 et 22.

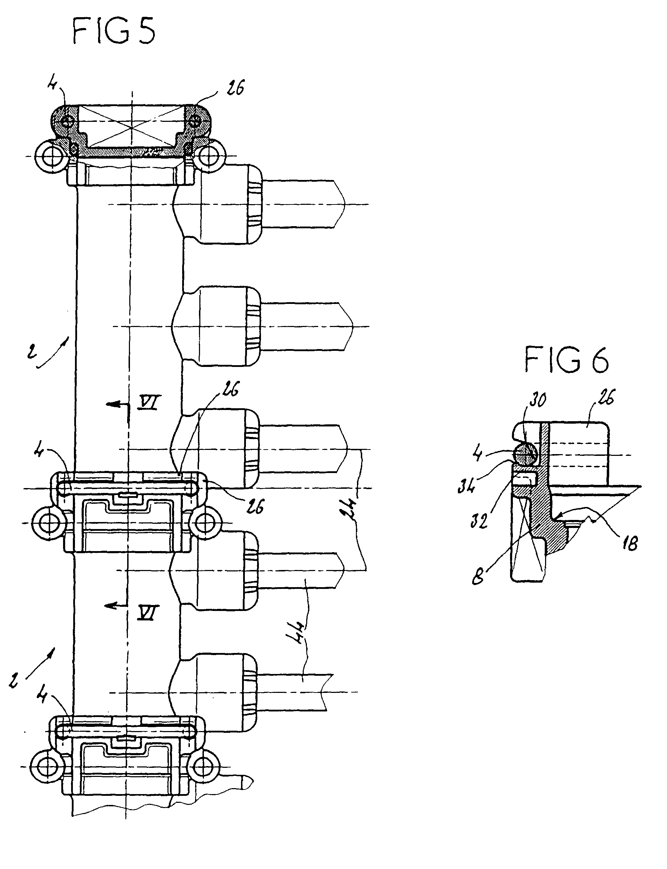

Pour assembler deux modules 2, on place par exemple un joint torique 6 autour d'un embout mâle 14 d'un module 2 puis on introduit cet embout mâle 14 dans l'embout femelle 16 du second module. Les deux modules 2 sont orientés de telle sorte que les oreilles 20 du premier module viennent se placer entre les visières 26 du second module. La position des oreilles 20 et des alésages 22 est telle que les alésages 22 du premier module sont alignés avec les alésages 28 du second module lorsque les deux modules sont correctement emboîtés l'un dans l'autre et que le joint torique 6 est en place dans le logement 18 prévu à cet effet en réalisant une bonne étanchéité entre les deux modules. Une fois les alésages 22 et 28 alignés, on vient introduire par ses extrémités libres, l'étrier 4 dans les alésages. L'étrier 4 est introduit jusqu'à ce que sa base reliant les deux branches vienne prendre place dans la rainure 30 prévue à cet effet. La languette 32 vient retenir l'étrier 4 dans cette position. Un nez 34 (figure 6) est prévu sur la languette 32 pour garantir un bon maintien de l'étrier 4 dans la rainure 30.

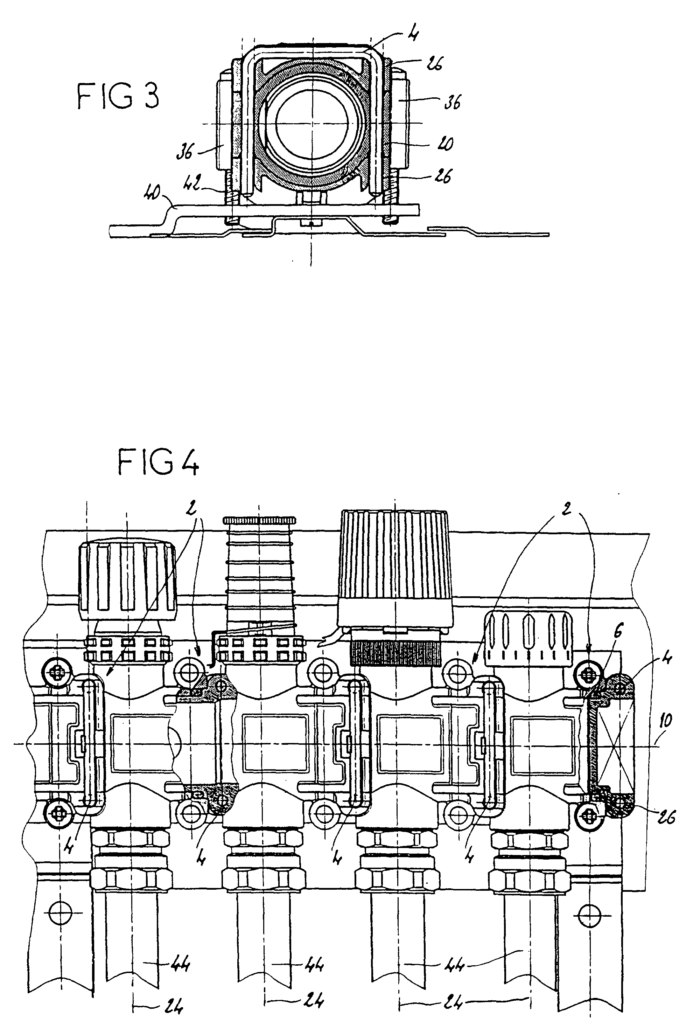

Comme on peut le voir au dessin, chaque module 2 présente une seconde paire d'oreilles 36 dans lesquelles sont réalisés des alésages 38. Ces derniers sont parallèles aux alésages 22 et 28. Ils sont destinés à recevoir une vis de fixation pour la fixation du module sur un support. La figure 3 montre un tel exemple de fixation. Cette figure est une coupe transversale passant par un étrier 4 reliant deux modules 2. Ces deux modules sont disposés sur une platine 40. Deux vis 42 traversant les oreilles 36 permettent la fixation des deux modules 2 sur la platine 40.

La figure 4 montre un ensemble de quatre modules assemblés les uns aux autres et formant un collecteur. Ce dernier comporte quatre sorties pour fluide. A chacune de ces sorties est raccordé un tuyau 44. Chaque module 2 présente deux sorties 12. Une de ces sorties reçoit un tuyau 44 tandis que l'autre sortie peut recevoir un dispositif tel par exemple une commande manuelle, une commande thermostatique, un débitmètre, etc....

La description faite ci-dessus se rapporte à des modules destinés à n'être raccordés qu'à un organe récepteur, tel par exemple un radiateur ou un circuit de plancher chauffant ou rafraîchissant. Il est également possible, avec un module selon l'invention, d'alimenter avec un même module deux ou plusieurs organes récepteurs. La figure 5 montre deux modules assemblés l'un à l'autre, l'un des modules alimentant deux organes récepteurs et l'autre en alimentant trois.

Un collecteur réalisé avec des modules selon l'invention présente de nombreux avantages. Comme il ressort de la description ci-dessus, il suffit d'emboîter deux modules l'un dans l'autre et de placer un étrier pour les maintenir en place . Le monteur n'a besoin d'aucun outil, pas même d'un tournevis pour réaliser le montage.

Une fois l'étrier en place, la conception du produit garantit une bonne étanchéité grâce au joint torique. Le monteur n'a aucune influence sur ce joint. Il n'est pas possible de trop le comprimer ou d'avoir un montage trop lâche.

Il est possible d'intervenir rapidement sur une installation existante munie d'un collecteur module selon l'invention par simple dégrafage et écartement des modules.

La conception des modules selon l'invention permet d'avoir des sorties opposées d'un collecteur à l'autre. Il est donc possible au cours du montage d'utiliser au mieux l'espace disponible.

Lorsque le collecteur doit être monté dans un endroit relativement exigu, il est possible de mettre en place l'étrier d'un côté ou de l'autre. En effet, le module est symétrique et permet donc une mise en place de l'étrier dans deux sens opposés.

Enfin, un collecteur selon l'invention peut facilement se fixer directement au sol ou sur un mur. D'autres montages sont bien entendu possibles.

Comme il va de soi, l'invention ne se limite pas à la forme de réalisation préférentielle décrite ci-dessus à titre d'exemple non limitatif ; elle en embrasse au contraire toutes les variantes dans le cadre des revendications ci-après.

Ainsi par exemple il n'est pas obligatoire d'avoir de chaque côté du module un alésage qui est pris en sandwich entre deux autres alésages. On pourrait par exemple avoir uniquement un alésage de chaque côté du module tant du côté de l'embout mâle que de l'embout femelle. Le nombre d'alésages peut être choisi librement.

L'utilisation d'un joint torique pour réaliser l'étanchéité est optionnelle. D'autres types de joint peuvent bien entendu également être utilisés. On peut même prévoir une étanchéité ne mettant pas en oeuvre de joint rapporté.

Un module selon l'invention est avantageusement symétrique. Toutefois, on ne sortirait pas du cadre de l'invention en ayant un module ne présentant pas de plan de symétrie.

D'autres moyens qu'une languette de retenue peuvent être envisagés pour maintenir l'étrier en place. Ce dernier n'est pas indispensable non plus dans l'invention. On pourrait en effet avoir simplement deux tiges venant maintenir l'alignement des alésages de part et d'autre du corps tubulaire du module. Les tiges utilisées pourraient être alors par exemple une goupille cylindrique fendue, un boulon ou similaire.

## Revendications

1. Module (2) pour un collecteur pour distribution de fluide, comportant un corps tubulaire (8) s'étendant selon un premier axe (10) dans lequel est réalisé au moins une sortie radiale (12),
**caractérisé en ce que** le module (2) présente à une extrémité un embout femelle (16) et à son autre extrémité un embout mâle (14) correspondant, et
**en ce que** des alésages (22,28) s'étendant dans un plan sensiblement perpendiculaire au premier axe (10) sont prévus de part et d'autre du module (2) à chacune de ses extrémités, de telle sorte que lorsque deux modules (2) sont emboîtés l'un dans l'autre, les alésages (22) d'un module soient alignés avec les alésages (28) de l'autre module de part et d'autre de l'ensemble ainsi réalisé.

2. Module selon la revendication 1 , **caractérisé en ce que** les alésages (22,28) réalisés de part et d'autre du module (2) sont parallèles.

3. Module selon l'une des revendications 1 ou 2, **caractérisé en ce qu'**il présente un plan de symétrie comportant le premier axe (10) et passant par l'axe d'une sortie radiale (12).

4. Module selon l'une des revendications 1 à 3, **caractérisé en ce qu'**il présente du côté de l'embout mâle (14), de chaque côté du corps tubulaire (8), un alésage (22) s'étendant dans un plan perpendiculaire au premier axe (10) et **en ce que**, du côté de l'embout femelle (16), de chaque côté du corps tubulaire (8), se trouvent deux alésages (28) alignés, distants l'un de l'autre, de telle sorte que lorsque deux modules (2) voisins sont emboîtés l'un dans l'autre, chaque alésage (22) correspondant à un embout mâle (14) se trouve entre les deux alésages (28) correspondants de la partie femelle (16) de l'autre module.

5. Module selon l'une des revendications 1 à 4, **caractérisé en ce qu'**il comporte, du côté de l'embout femelle (16), une languette de retenue (32), disposée entre les alésages (28) se trouvant de part et d'autre du corps (8) et sensiblement tangente à ces alésages.

6. Module selon l'une des revendications 1 à 5, **caractérisé en ce qu'**il présente du côté de l'embout femelle (16), dans celui-ci, un logement (18) périphérique destiné à recevoir un joint torique (6).

7. Module selon l'une des revendications 1 à 6, **caractérisé en ce qu'**il comporte deux sorties radiales (12) opposées.

8. Collecteur pour distribution de fluide, **caractérisé en ce qu'**il comporte au moins deux modules (2) selon l'une des revendications 1 à 7.

9. Collecteur selon la revendication 8, **caractérisé en ce qu'**il comporte en outre un étrier (4) en forme de U, chaque branche du U venant s'enfiler dans un ensemble d'alésages (22,28) alignés se trouvant d'un côté du corps tubulaire (8).

10. Collecteur selon l'une des revendications 8 ou 9, **caractérisé en ce qu'**il comporte en outre un joint torique (6) prenant place autour de l'embout mâle (14) d'un module.

## Claims

1. Module (2) for a manifold for a fluid main, comprising a tubular body (8) extending along a first axis (10) and in which at least one radial outlet (12) is made,
**characterized in that** the module (2) has at one end a female end piece (16) and at its other end a corresponding male end piece (14), and
**in that** bores (22, 28) extending in a plane approximately perpendicular to the first axis (10) are provided on each side of the module (2) at each of its ends, so that when two modules (2) are fitted one inside the other, the bores (22) of one module align with the bores (28) of the other module on each side of the assembly thus produced.

2. Module according to Claim 1, **characterized in that** the bores (22, 28) produced on each side of the module (2) are parallel.

3. Module according to one of Claims 1 and 2, **characterized in that** it has a plane of symmetry containing the first axis (10) and passing through the axis of a radial outlet (12).

4. Module according to one of Claims 1 to 3, **characterized in that** it has, at the same end as the male end piece (14), on each side of the tubular body (8), a bore (22) running in a plane perpendicular to the first axis (10), and **in that**, at the same end as the female end piece (16), on each side of the tubular body (8), there are two aligned bores (28), distant from one another, so that when two adjacent modules (2) are fitted one inside the other, each bore (22) corresponding to a male end piece (14) lies between the corresponding two bores (28) of the female part (16) of the other module.

5. Module according to one of Claims 1 to 4, **characterized in that** it comprises, at the same end as the female end piece (16), a retaining tab (32), arranged between the bores (28) that lie on each side of the body (8) and more or less tangential to these bores.

6. Module according to one of Claims 1 to 5, **characterized in that**, at the same end as the female end piece (16) and therein, it has a peripheral housing (18) intended to house an O-ring (6).

7. Module according to one of Claims 1 to 6, **characterized in that** it has two opposed radial outlets (12).

8. Manifold for a fluid main, **characterized in that** it comprises at least two modules (7) according to one of Claims 1 to 7.

9. Manifold according to Claim 8, **characterized in that** it further comprises a U-shaped bracket (4), each branch of the U being plugged into a set of aligned bores (22, 28) lying on one side of the tubular body (8).

10. Manifold according to one of Claims 8 and 9, **characterized in that** it further comprises an O-ring (6) positioned around the male end piece (14) of a module.

## Patentansprüche

1. Modul (2) für eine Fluidverteilung-Sammeleinheit mit einem sich entlang einer ersten Achse (10) erstreckenden rohrförmigen Körper (8), in welchem mindestens ein radialer Ausgang (12) vorgesehen ist,
**dadurch gekennzeichnet, dass** das Modul (2) an einem Ende eine Buchsenmuffe (16) und an seinem anderen Ende eine entsprechende Einsatzmuffe (14) besitzt, und dass Bohrungen (22, 28), die sich in einer zu der ersten Achse (10) im wesentlichen senkrechten Ebene erstrecken, beiderseits des Moduls (2) an jedem seiner Enden derart vorgesehen sind, dass beim Ineinandersetzen zweier Module (2) die Bohrungen (22) des einen Moduls mit den Bohrungen (28) des anderen Moduls beiderseits der so hergestellten Einheit ausgerichtet sind.

2. Modul nach Anspruch 1, **dadurch gekennzeichnet, dass** die beiderseits des Moduls (2) vorgesehenen Bohrungen (22, 28) parallel sind.

3. Modul nach einem der Ansprüche 1 oder 2, **dadurch gekennzeichnet, dass** es eine die erste Achse (10) aufweisende Symmetrieebene besitzt und durch die Achse eines radialen Ausgangs (12) verläuft.

4. Modul nach einem der Ansprüche 1 bis 3, **dadurch gekennzeichnet, dass** es auf der Seite der Einsatzmuffe (14) beiderseits des rohrförmigen Körpers (8) eine Bohrung (22) besitzt, die sich in einer Ebene senkrecht zu der ersten Achse (10) erstreckt, und dass sich auf der Seite der Buchsenmuffe (16) auf jeder Seite des rohrförmigen Körpers (8) zwei voneinander entferrite ausgerichtete Bohrungen (28) derart befinden, dass beim Ineinanderstecken zweier Module (2) jede Bohrung (22), die einer Einsatzmuffe (14) entspricht, sich zwischen den beiden entsprechenden Bohrungen (28) der Buchsenmuffe (16) des anderen Moduls befindet.

5. Modul nach einem der Ansprüche 1 bis 4, **dadurch gekennzeichnet, dass** es auf der Seite der Buchsenmuffe (16) eine Haltezunge (32) aufweist, die zwischen den sich beiderseits des Körpers (8) befindlichen Bohrungen (28) angeordnet ist und im wesentlichen tangential zu diesen Bohrungen ist.

6. Modul nach einem der Ansprüche 1 bis 5, **dadurch gekennzeichnet, dass** es auf der Seite der Buchsenmuffe (16) in dieser einen sich in der Umfangsrichtung erstreckenden Sitz (18) aufweist, der zur Aufnahme eines O-Rings (6) dient.

7. Modul nach einem der Ansprüche 1 bis 6, **dadurch gekennzeichnet, dass** es zwei gegenüberliegende radiale Ausgänge (12) aufweist.

8. Fluidverteilung-Sammeleinheit, **dadurch gekennzeichnet, dass** sie mindestens zwei Module (2) gemäss einem der Ansprüche 1 bis 7 aufweist.

9. Sammeleinheit nach Anspruch 8, **dadurch gekennzeichnet, dass** sie ausserdem einen U-förmigen Bügel (4) aufweist, wobei jeder Schenkel des U in eine Einheit ausgerichteter Bohrungen (22, 28) einschiebbar ist, die sich auf einer Seite des rohrförmigen Körpers (8) befinden.

10. Sammeleinheit nach einem der Ansprüche 8 oder 9, **dadurch gekennzeichnet, dass** sie ausserdem einen O-Ring (6) aufweist, der um die Einsatzmuffe (14) eines Moduls angeordnet ist.
